Europäisches Patentamt

European Patent Office

Office européen des brevets

(19)

(11) Numéro de publication : **0 515 241 B1**

(12) **FASCICULE DE BREVET EUROPEEN**

(45) Date de publication du fascicule du brevet :
**06.12.95 Bulletin 95/49**

(51) Int. Cl.⁶ : **H04M 3/56**

(21) Numéro de dépôt : **92401244.6**

(22) Date de dépôt : **30.04.92**

(54) **Système de téléréunion téléphonique.**

(30) Priorité : **21.05.91 FR 9106108**

(43) Date de publication de la demande :
**25.11.92 Bulletin 92/48**

(45) Mention de la délivrance du brevet :
**06.12.95 Bulletin 95/49**

(84) Etats contractants désignés :
**DE ES FR GB IT**

(56) Documents cités :
**FR-A- 2 592 541**
**US-A- 3 622 708**
**ELECRO CONF. RECORD vol. 4, Avril 1979,
pages 1 - 11; C. STOCKBRIDGE: 'The Evolution of a Multimode Multilocation Audioconferencing System'**

(73) Titulaire : **FRANCE TELECOM
Etablissement autonome de droit public,
6, Place d'Alleray
F-75015 Paris (FR)**

(72) Inventeur : **Pillet, Michel
12, rue Torpilleur Adroit
F-29200 Brest (FR)**
Inventeur : **Piriou, Daniel
5, allée des Frères Lumière
F-29280 Plouzane (FR)**

(74) Mandataire : **Cabinet Martinet & Lapoux
BP 405
F-78055 Saint Quentin en Yvelines Cédex (FR)**

## Description

La présente invention concerne un système de téléréunion téléphonique connectable au réseau téléphonique, public ou privé, afin de relier simultanément plusieurs postes téléphoniques de participants et ainsi établir une audioconférence.

Le système de téléréunion comprend un terminal relié au réseau téléphonique par une pluralité de lignes téléphoniques de terminal en nombre égal au nombre maximum de participants à une téléréunion. Chacun des participants est muni d'un poste téléphonique qui est associé à des moyens pour générer des signaux codés à multifréquence et qui est desservi sélectivement par l'une des lignes de terminal à travers le réseau téléphonique. L'une des lignes téléphoniques de terminal est assignée à un organisateur de la téléréunion. Cet organisateur contrôle la téléréunion à travers le terminal afin principalement d'appeler les participants, de recevoir les appels des participants, de sélectionner les participants dont la parole est à diffuser vers les autres participants, de restaurer la diffusion de parole à des participants en "auditeur simple", et de retirer des participants de la téléréunion.

Un terminal pour un tel système de téléréunion est divulgué dans la demande de brevet français FR-A-2592541. Ce terminal comprend plusieurs moyens d'établissement et de rupture de communication desservant respectivement lesdites lignes de terminal pour prendre les lignes de terminal et appeler les participants sous la commande du poste de l'organisateur et pour répondre à des appels des postes des participants et communiquer les appels au poste de l'organisateur, des moyens de commutation et diffusion reliés aux plusieurs moyens d'établissement et de rupture de communication pour diffuser sélectivement sous la commande du poste de l'organisateur des signaux vocaux émanant d'au moins l'un des postes de participant vers les autres postes de participant au cours de la téléréunion, un détecteur à code multifréquence relié à l'un des plusieurs moyens d'établissement et de rupture de communication desservant la ligne de terminal d'organisateur pour décoder des signaux de commande codés transmis par le poste d'organisateur en des signaux de commande décodés, et un circuit de commande pour établir et rompre des communications entre les participants et l'organisateur à travers lesdits moyens d'établissement et de rupture de communication et pour sélectionner au moins l'un desdits postes de participant dont des signaux vocaux sont à diffuser vers les autres postes, en fonction desdits signaux de commande décodés.

Dans ce système de téléréunion, toutes les opérations précitées commandées dans le terminal par l'organisateur ne sont pas confirmées à l'organisateur. Lorsqu'une opération est décidée par l'organisateur, celui-ci ignore si l'opération a été effectuée par le terminal; en cas de fonctionnement défectueux du terminal, l'organisateur ne peut attribuer le défaut d'opération au terminal ou à une commande érronée. En outre, particulièrement lorsque le nombre de participants est élevé et lorsque les opérations à effectuer en cours de téléréunion sont nombreuses, il est difficile à l'organisateur de se souvenir exactement de l'état des diverses connexions et déconnexions de lignes et des attributions de lignes et de parole aux participants dans le terminal.

La présente invention vise à remédier aux inconvénients de la technique antérieure évoqués ci-dessus en apportant à l'organisateur une assistance au déroulement de la téléréunion sous la forme d'information indiquant des opérations essentielles effectuées par le terminal.

A cette fin, un système de téléréunion du type défini dans l'entrée en matière est caractérisé en ce que
- le terminal comprend en outre un émetteur à code multifréquence relié audit moyen d'établissement de communication desservant la ligne téléphonique d'organisateur pour coder des signaux de signalisation établis par le circuit de commande de manière à transmettre des signaux de signalisation codés vers le poste téléphonique d'organisateur, et
- ledit système comprend une console pour l'organisateur, ladite console incluant des moyens de réception à code multifréquence connectables à une ligne téléphonique d'abonné desservant le poste d'organisateur pour détecter des prises et libérations de la ligne d'abonné et décoder lesdits signaux de commande codés et lesdits signaux de signalisation codés, des moyens d'affichage, et des moyens de commande pour commander l'affichage d'informations en réponse respectivement aux signaux de commande et de signalisation décodés dans les moyens de réception.

Ainsi, la console permet de visualiser tout évènement remarquable se produisant dans le terminal, tel que des connexions et deconnexions de participants à la réunion, et les numéros des lignes téléphoniques du terminal libres ou occupées, associées aux noms des participants. L'organisateur peut également visualiser la programmation courante du terminal. Les moyens d'affichage dans la console reflètent ainsi, en permanence, la configuration exacte du terminal distant. En particulier, l'émetteur à code multifréquence inclus dans le terminal autorise la transmission de tout évènement non commandé par le poste de l'organisateur, tel que par exemple la prise ou la libération d'une ligne de terminal par un participant.

D'autres caractéristiques relatives principalement au terminal et aux moyens d'affichage sont énoncées dans les revendications 2 à 7.

L'invention vise également à offrir la possibilité à tout participant à la téléréunion de transmettre une indication à l'organisateur, que le participant ait droit à la parole ou non, c'est-à-dire indépendamment de la diffusion des signaux vocaux du participant vers les autres participants. L'indication peut être une demande d'intervention d'un participant intervenant afin que l'organisateur lui donne la parole, ou bien une information particulière choisie parmi d'autres à transmettre par chacun des participants en réponse à une demande de l'organisateur.

Le terminal comprend alors, en outre, une pluralité de détecteurs à code multifréquence respectivement reliés aux moyens d'établissement et de rupture de communication pour décoder des signaux d'indication établis et transmis par des postes de participant, y compris des postes dont les participants sont placés en écoute simple et n'ont pas le droit à la parole sous la commande du poste d'organisateur. Le circuit de commande retransmet les signaux d'indication à travers l'émetteur vers le poste téléphonique de l'organisateur afin que les moyens d'affichage dans la console affichent des indications supportées par les signaux d'indication retransmis.

D'autres caractéristiques relatives à des demandes d'intervention par les participants à l'organisateur et à des demandes de transmission d'information par l'organisateur à destination des participants sont définies dans les revendications 9 à 14.

Enfin, d'autres caractéristiques relatives notamment à la programmation de créneaux horaires et de listes de numéros d'appel de participant pour des téléréunions et à la consultation de ces divers paramètres de téléréunion par l'organisateur sont énoncées dans les revendications 15 à 17.

D'autres avantages de l'invention apparaîtront plus clairement à la lecture de la description suivante de plusieurs réalisations préférées de l'invention en référence aux dessins annexés correspondants dans lesquels :

- la Fig. 1 est un bloc-diagramme schématique d'un système de téléréunion téléphonique selon l'invention,
- la Fig. 2 est un bloc-diagramme d'un terminal de téléréunion selon l'invention, et
- la Fig. 3 montre un panneau d'affichage dans une console de téléréunion selon l'invention.

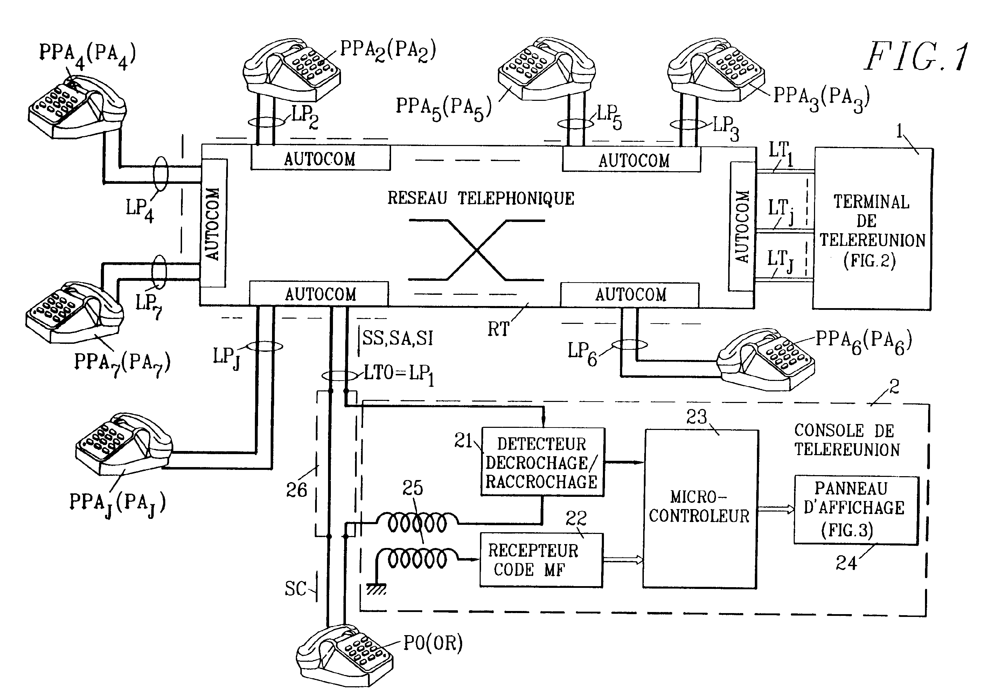

En référence à la Fig. 1, un système de téléréunion téléphonique comprend essentiellement un terminal de téléréunion 1 et une console de téléréunion 2.

Il est supposé dans la suite, à titre d'exemple, que $J = 8 \geqq 3$ lignes téléphoniques de terminal $LT_1$ à $LT_J = LT_8$ desservent le terminal 1 à partir d'un autocomutateur local du réseau téléphonique public RT. Par conséquent au plus J participants $PA_1$ à $PA_J$, y compris l'organisateur OR de la téléréunion, peuvent participer à une téléréunion. Il est à noter que le mot "participant" désigne soit une personne soit un groupe de personnes, lesdites personnes dans ce groupe étant en relation à travers un autre système de téléréunion; dans ce dernier cas, la téléréunion ainsi constituée est une multiréunion (téléréunion de plusieurs téléréunions).

La console de téléréunion 2 est située à proximité d'un poste téléphonique PO dans le local de l'organisateur d'une téléréunion. La console 2 est interconnectée à l'un des fils de la ligne téléphonique d'abonné LTO desservant le poste d'organisateur PO, à travers un conjoncteur téléphonique amovible classique 26. Comme le poste PO relié au réseau téléphonique RT, les postes téléphoniques $PPA_2$ à $PPA_J$ des divers participants $PA_2$ à $PA_J$ situés à des endroits éloignés sur le territoire national ou à l'étranger, sont reliés au réseau RT par des lignes téléphoniques d'abonné respectives $LP_2$ à $LP_J$. Les postes téléphoniques des participants, y compris celui de l'organisateur, sont des postes classiques munis d'un clavier et incluant un générateur de signaux codés à multifréquence (MF), ou bien couplé à un tel générateur inclus par exemple dans une calculette de poche.

Le terminal de téléréunion 1 gère principalement des connexions et déconnexions et des échanges de signaux codés entre l'installation téléphonique de l'organisateur PO et les postes téléphoniques des participants lors de l'établissement d'une téléréunion, au cours de la téléréunion établie, et lors de la rupture de la téléréunion.

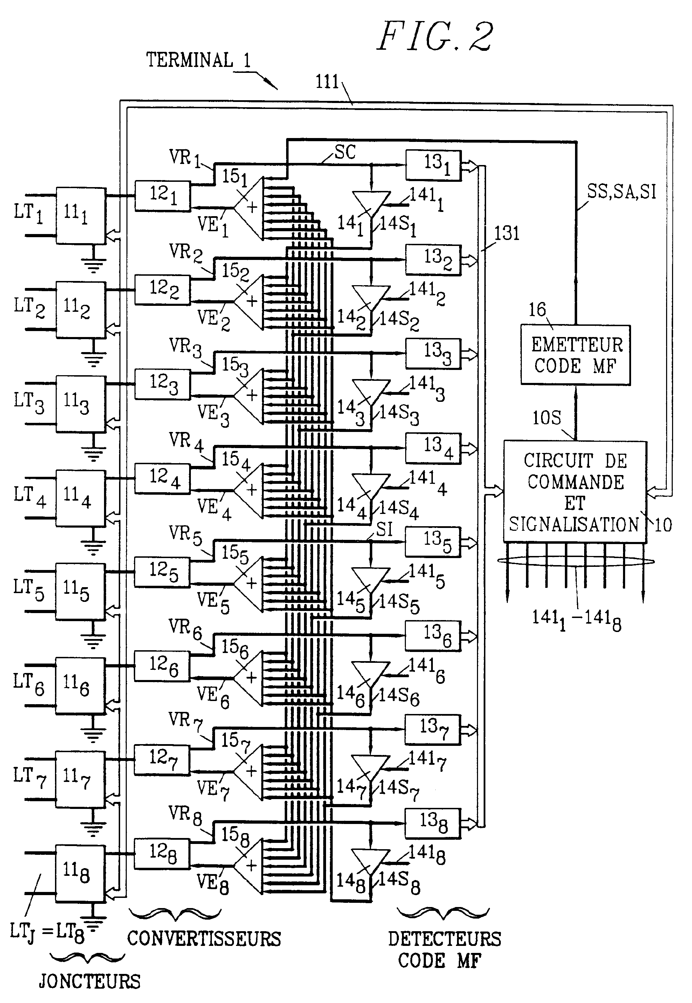

Comme montré à la Fig. 2, le terminal de téléréunion 1 comprend divers moyens fonctionnels sensiblement analogues à ceux décrits dans la demande de brevet français FR-A-2592541. Le terminal 1 comprend essentiellement un circuit de commande et signalisation 10 sous la forme d'une microprocesseur, ainsi que des ensembles de circuits $11_1$ - $15_1$ à $11_8$ - $15_8$ respectivement associés aux $J = 8$ lignes téléphoniques $LT_1$ à $LT_8$ desservant le terminal 1. Chaque ensemble de circuits, par exemple l'ensemble associé à la ligne de terminal $LT_j$, où j est un nombre entier compris entre 1 et $J = 8$, comporte un joncteur de ligne $11_j$, un convertisseur 2 fils - 4 fils $12_j$, un détecteur de code multifréquence $13_j$, un commutateur analogique $14_j$, et un sommateur-amplificateur $15_j$.

Il est supposé dans la suite que la ligne de terminal $LT_1$ est attribuable à l'organisateur OR de la téléréunion.

Le joncteur $11_j$ est interconnecté entre la ligne téléphonique à deux fils $LT_j$ et le convertisseur $12_j$. Le joncteur assure notamment la séparation des signaux de parole et de signaux codés à multifréquence détectables

EP 0 515 241 B1

par le détecteur 13$_j$, par rapport au courant de téléalimentation dans la ligne LT$_j$, détecte diverses tonalités téléphoniques, simule une opération de décrochage en réponse à une tonalité d'appel lors d'un appel de la ligne LT$_j$ par un participant ou en réponse à un appel d'un participant effectué par l'organisateur via la ligne LT$_1$, simule une opération de raccrochage lors de la rupture de communication effectuée par le participant ou l'organisateur et autorise l'émission des signaux de numérotation codés lors d'un appel de participant. Ces diverses opérations d'établissement et de rupture de communication propres à un participant PA via la ligne LT$_j$ sont gérées par le circuit de commande 10 à travers un bus 111.

Le convertisseur 12$_j$ convertit la voie bidirectionnelle à deux fils que constitue la ligne téléphonique LT$_j$ à travers le joncteur 11$_j$, en une voie de réception unidirectionnelle à deux fils VR$_j$ reliée aux entrées du détecteur 13$_j$ et du commutateur 14$_j$, et une voie d'émission unidirectionnelle à deux fils VE$_j$ reliée à la sortie du sommateur 15$_j$. Le convertisseur filtre également les signaux de parole et de signalisation en code multifréquence, par exemple dans une bande de fréquence vocale comprise entre 300 et 3400 Hz.

Le détecteur de code multifréquence 13$_j$ détecte des signaux en code à multifréquence transmis par le poste téléphonique à clavier classique ayant au moins 10 + 2 = 12 touches que possède le participant ayant pris la ligne de terminal LT$_j$. Le générateur multifréquence contenu dans le poste associe, comme il est connu, un couple de l'une de quatre fréquences nominales basses et de l'une de trois fréquences nominales hautes à chaque touche du clavier selon le tableau I suivant :

| Tableau I | | | |
|---|---|---|---|
| Fréquence basse | Touches | | |
| 697 Hz | 1 | 2 | 3 |
| 770 Hz | 4 | 5 | 6 |
| 852 Hz | 7 | 8 | 9 |
| 941 Hz | * | O | # |
| Fréquence haute | 1.209 Hz | 1.336 Hz | 1.477 Hz |

Le détecteur 13$_j$ convertit les signaux en code à multifréquence reçus en des signaux en code binaire délivrés au circuit de commande 10 à travers un bus 131. Ces signaux peuvent par exemple résulter de l'attribution de l'une des J-1 lignes de terminal LT$_2$ à LT$_8$ à un participant et de la composition du numéro d'appel téléphonique du participant effectuée par l'organisateur, les signaux correspondants étant détectés par le détecteur 13$_1$, ou résulter de commandes émises par le clavier de poste de l'organisateur ou d'indications émanant des claviers de postes des participants à destination de la console 2 pendant la téléréunion, comme précisé dans la suite.

Le commutateur analogique 14$_j$ a une sortie 14S$_j$ qui est reliée à l'une respective des J - 1 = 7 entrées de chacun des J - 1 sommateurs 15$_1$ à 15$_8$ autres que le sommateur 15$_j$ afin de retransmettre les signaux vocaux reçus dans la voie VR$_j$ vers les voies d'émission VE$_1$ à VE$_8$ autres que la voie VE$_j$ lorsque le commutateur 14$_j$ est fermé. Les fermetures et ouvertures du commutateur sont déclenchées par des états respectifs "1" et "0" dans un fil de sortie 141$_j$ du circuit de commande 10. Par exemple, le commutateur 141$_j$ est fermé lorsque le circuit 10 alloue la parole au participant PA$_j$ correspondant à la ligne de terminal LT$_j$ au cours de la téléréunion, ou lorque le circuit 10 restaure la parole à tous les participants.

Le sommateur 15$_j$ comporte J - 1 = 7 entrées reliées respectivement aux sorties des commutateurs 14$_1$ à 14$_J$ autres que le commutateur 14$_j$ et additionne les signaux traversant les commutateurs fermés parmi ces derniers pour les retransmettre globalement dans la voie d'émission VE$_j$ vers l'entrée du convertisseur 12$_j$. Ainsi, lorsque tous les commutateurs sont fermés, chaque signal dans une voie VR$_j$ est diffusé dans toutes les voies d'émission VE$_1$ à VE$_J$ autres que la voie VE$_j$ et donc vers tous les autres participants.

Comme également montré à la Fig. 2, le sommateur 15$_1$ assigné à l'organisateur OR comporte selon l'invention une entrée supplémentaire reliée à une sortie de signalisation 10S du circuit de commande 10 à travers un émetteur de code à multifréquence 16. Des signaux de signalisation SS délivrés par la sortie 10S sont élaborés par le circuit de commande 10 pour signaler des modes de fonctionnement préprogrammés du terminal et des événements remarquables relatifs à la téléréunion indépendamment de toute commande établie par le poste PO de l'organisateur à la console de téléréunion 2 afin de mettre à jour un panneau d'affichage de

4

voyants inclus dans la console. Ces signaux de signalisation délivrés en code binaire par le circuit 10 sont convertis en code à multifréquence à trois caractères Q23 du CCITT par l'émetteur 16 pour être transmis dans la ligne $LT_1$ via le sommateur $15_1$ et la voie d'émission $VE_1$.

Les signaux de signalisation SS concernent d'une part des modes particuliers de téléréunion programmés en mémoire morte programmable PROM du circuit 10, d'autre part des connexions et déconnexions des lignes de participant. Chaque signal de signalisation est composé de deux caractères identiques A, B, C ou D encadrant un chiffre correspondant à une combinaison de fréquences selon le tableau I. Les caractères A, B, C et D correspondent aux combinaisons de fréquences [697 Hz + 1 633 Hz], [770 Hz + 1 633 Hz], [852 Hz + 1 633 Hz] et [941 Hz + 1 633 Hz] du code Q23 du CCITT respectivement. Par comparaison avec le tableau I, il apparaît que ces quatre combinaisons ne sont pas accessibles par le clavier de tout poste téléphonique, ce qui permet à la console 2 de distinguer des premiers et seconds signaux codés qui sont respectivement des signaux de commande SC émis par le poste PO et des signaux de signalisation SS émis par le terminal 1.

A titre d'exemple, un premier groupe de signaux de signalisation SS comprend les cinq séquences suivantes qui sont émises par le terminal 1 vers le poste d'organisateur PO après réception du numéro d'appel du terminal et du code d'accès qui sont composés par l'organisateur :

- BOB signalant une libération totale du terminal 1 suite au raccrochage de tous les combinés de poste de participant, et à la mise au repos du terminal;
- B1B autorisant un mode "7 + 1" ainsi qu'un mode "additif"; le mode "7 + 1" signale que la ligne $LT_1$ est réservée uniquement à l'organisateur de la téléréunion, et que seul celui-ci peut y accéder, même en cours de téléréunion, en composant un code d'accès à quatre chiffres (a b c d) au clavier du poste PO; le mode "additif" signale que les participants peuvent être appelés par l'organisateur, et a contrario, le mode"additif" n'est pas autorisé lorsque les participants peuvent seulement appeler eux-mêmes le terminal 1 pour établir les communications (mode "rendez-vous");
- B2B autorisant le mode "7 + 1" et interdisant le mode "additif";
- B3B autorisant un troisième mode"conf à 8"ainsi que le mode "additif"; le mode "conf à 8" signale que J = 8 participants peuvent participer à une téléréunion dite "conférence à huit"; par conséquent, le mode "conf à 8" ne peut être simultané avec le mode "7 + 1"; et
- B4B autorisant le mode "conférence à 8" (conf.8) et interdisant le mode "additif", ce qui signifie que l'organisateur est considéré comme participant et ne peut appeler les participants.

Les signaux de signalisation d'un second groupe sont sous la forme de séquences CjC et DjD. Une séquence CjC indique une connexion de la ligne $LT_j$, avec $j \neq 1$, lorsque la ligne de terminal $LT_j$ est prise par un participant, suite à la composition du numéro d'appel de la ligne et à une simulation de décrochage dans le joncteur $11_j$. Une séquence DjD indique une déconnexion de la ligne $LT_j$, avec $j \neq 1$, lorsque cette ligne est libérée par le participant ou par simulation de racrochage dans le joncteur $11_j$. Les séquences C1C et D1D sont inutiles puisque les opérations de décrochage et de racrochage dans le poste téléphonique PO de l'organisateur sont détectées directement dans la ligne d'abonné LTO par la console 2.

En se référant à nouveau à la Fig. 1, la console de téléréunion 2 comprend essentiellement, comme dans la plupart de dispositif de surveillance de ligne téléphonique sans intervention sur les communications supportées par la ligne, un détecteur de décrochage / racrochage 21, un récepteur de code à multifréquence 22, et un microcontrôleur de commande 23 commandant des voyants du type LED dans un panneau d'affichage 24.

Le détecteur 21 est interconnecté à l'un des fils de la ligne d'abonné LTO à travers l'enroulement primaire d'un transformateur 25 et signale au microcontrôleur 23 toute prise de la ligne suite à un décrochage de combiné dans le poste PO et toute libération de la ligne suite à un racrochage du combiné dans le poste PO, quel que soit le type de communication d'arrivée ou de départ. Le récepteur 22 est relié à l'enroulement secondaire du transformateur 25 et détecte tout signal codé multifréquence transmis dans la ligne pour le convertir en mot binaire à appliquer au microcontrôleur. L'entrée et la sortie du détecteur 21 sont connectables directement et à travers l'enroulement primaire du transformateur 25 à la ligne téléphonique LTO de préférence au moyen du conjoncteur téléphonique amovible 26.

Le microcontrôleur 23 dans la console 2 distingue ainsi des premiers et seconds signaux codés SC et SS qui sont respectivement transmis par un générateur à multifréquence commandé par les touches du clavier dans le poste PO et conformes au tableau I, et transmis par l'émetteur à multifréquence 16 dans le terminal de téléréunion 1 et comprenant notamment des caractères A, B, C et D définis ci-dessus.

A titre d'exemple, les premiers signaux en code à multifréquence SC établis par le poste d'organisateur PO sont composés des séquences suivantes réparties en deux groupes, selon que la séquence est destinée à préprogrammer le terminal 1 lors de la préparation de téléréunion, ou à commander des opérations au cours d'une téléréunion :

1) Commandes de programmation du terminal de téléréunion :

| ### | interdiction du mode "additif", |
|---|---|
| #*# | autorisation du mode "additif", |
| #1# | positionnement en mode "7 + 1", |
| *1* | positionnement en mode "conférence à 8", |
| *#*abcd | chargement du code d'accès "organisateur" abcd, |
| *#*# | suppression de tout code d'accès au terminal, |
| *9# | contrôle du nombre de prises additives. |

2) Commandes opérationnelles pendant une téléréunion :

| *2* à *8* | prise en mode "additif" d'une ligne $LT_2$ à $LT_8$ si elle était libre, ou allocation de parole à cette ligne, les autres étant placées dans ce cas en mode "auditeur simple", |
|---|---|
| *9* | contrôle du nombre de participants connectés, |
| *O* | allocation de parole à tous les participants, |
| #0* | déverrouillage global des lignes $LT_2$ à $LT_8$ (mode "rendez-vous"), |
| #2* à #8* | déverrouillage d'une ligne $LT_2$ à $LT_8$ (mode "rendez-vous"), |
| #2# à #8# | vérrouillage de la ligne $LT_2$ à $LT_8$ (mode "rendez-vous") et libération de cette ligne, |
| *O#ij* | allocation de parole aux participants $PA_i$ et $PA_j$ desservis par les lignes $LT_i$ et $LT_j$, les autres étant placés en mode "auditeur simple", |
| *O#* | suppression d'allocation de parole à tous les participants (discussion fractionnée), |
| #0# | libération totale du terminal de téléréunion, |
| **j* | acquittement d'information émanant du participant $PA_j$ et diffusion d'un carillon au participant, |
| *** | diffusion générale d'un carillon et suppression d'allocation de parole à tous les participants (discussion fractionnée). |

Les opérations de déverrouillage et verrouillage d'une ligne de terminal $LT_j$ correspondent à des opérations de préparation de décrochage et racrochage simulées par le joncteur $11_j$ sous la commande du circuit 10, respectivement lorsque l'organisateur décide que le participant desservi par la ligne $LT_j$ doit entrer dans la téléréunion ou doit être écarté de la téléréunion; ces opérations sont effectuées en "mode rendez-vous" suite à un appel de ligne $LT_j$ par le participant $PA_j$.

Afin d'éviter tout affichage dans la console correspondant à un signal de commande SC reçu de manière erronée dans le terminal 1, ce dernier transmet vers la console 2, via l'émetteur 16, un signal d'acquittement de commande SA qu'après décodage du signal SC par le détecteur $13_1$ et exécution de l'opération correspondant au signal de commande par le circuit 10. Le signal d'acquittement qui correspond au caractère A (697 Hz + 1633 Hz) du code Q23, déclenche une signalisation correspondante dans la console 2 que si le signal d'acquittement SA est reçu au plus après une période prédéterminée TA succédant à la détection du signal de commande dans la console. La période prédéterminée TA est inférieure à une seconde, typiquement 300 ms. Si le signal d'acquittement SA n'est pas reçu pendant la période TA, le signal de commande établi par le poste PO et enregistré dans le microcontrôleur 23 est détruit et aucun affichage n'est effectué dans le panneau 24.

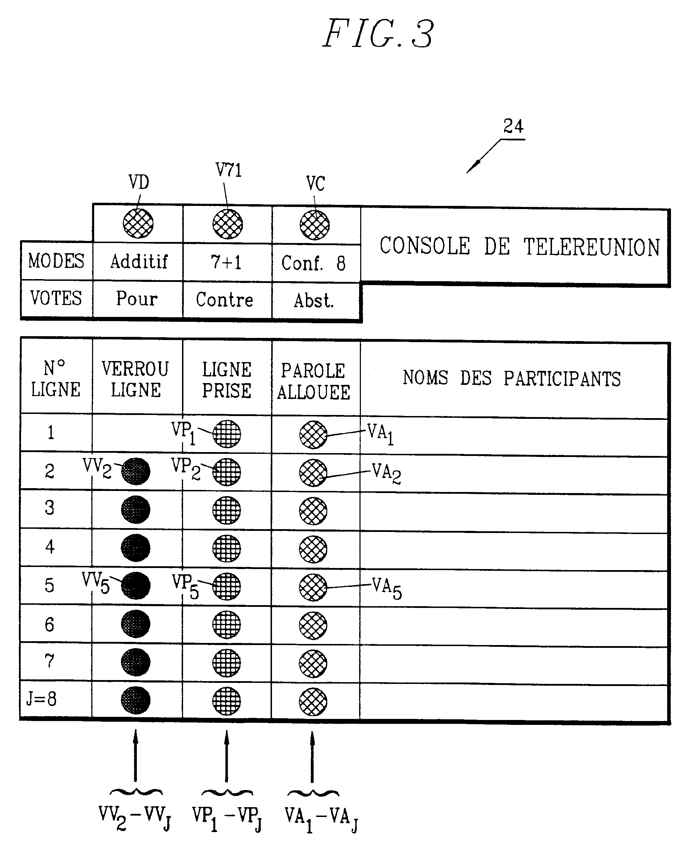

La console 2 est par exemple sous la forme d'un petit coffret dont la face avant présente le panneau d'affichage 24. Comme montré à la Fig. 3, le panneau 24 comporte une matrice à J = 8 rangées et cinq colonnes. Les rangées de la matrice sont attribuées respectivement aux lignes téléphoniques $LT_1$ à $LT_8$ desservant le terminal de téléréunion 1. La rangée relative à la ligne $LT_j$ comporte le numéro de ligne j dans une première colonne, des premier, second et troisième voyants du type LED, $VV_j$, $VP_j$ et $VA_j$ de couleurs différentes, par exemple rouge, jaune et verte, dans les colonnes suivantes, et un cadre où peut être inscrit le nom du participant $PA_j$ dans la cinquième colonne. Chaque rangée comporte trois voyants, à l'exception de préférence de la première rangée attribuée à l'organisateur OR, qui ne comporte que deux voyants $VP_1$ et $VA_1$.

Lorsqu'il est allumé, le premier voyant $VV_j$ avec $2 \leq j \leq 8$ indique que la ligne de terminal $LT_j$ est verrouillée en mode "rendez-vous" suite à la réception du signal de séquence #j#; aucun des participants ne peut accéder à la téléréunion à travers la ligne $LT_j$. Le voyant $VV_j$ est éteint en réponse à un signal de séquence #j* ou éventuellement #0*, commandant le déverrouillage de la ligne $LT_j$.

Le second voyant $VP_j$, avec $1 \leq j \leq 8$, est allumé pour signifier que la ligne de terminal $LT_j$ est prise par le participant $PA_j$, en réponse au signal de signalisation CjC. Lorsque la ligne $LT_j$ est libérée par le participant, le signal de signalisation DjD provoque l'extinction du voyant $VP_j$.

Le troisième voyant $VA_j$ lorsqu'il est allumé, indique que le participant correspondant à la ligne de terminal $LT_j$ dont la prise est signalée par le second voyant $VP_j$ allumé, est autorisé à intervenir, c'est-à-dire que les signaux de parole dans la voie de réception $VR_j$ sont diffusés vers les autres participants à travers le commutateur $14_j$ à l'état fermé. La fermeture du commutateur $14_j$ et l'allumage du troisième voyant $VA_j$ font suite au signal de commande *j*, ou éventuellement *O* ou *O#ij*. Lorsque le voyant $VA_j$ est éteint et donc le commu-

6

tateur 14j est ouvert, le participant $PA_j$ dont le poste $PPA_j$ relié à la ligne $LT_j$, est un "auditeur simple" et n'a pas le droit d'intervenir dans la téléréunion; il ne peut recevoir que des signaux de parole émanant des participants autorisés à prendre la parole, à travers le sommateur $15_j$. Le voyant $VA_j$ est ainsi éteint suite à un signal de commande $*i*$, ou $*O\#ik*$, où i et k sont des entiers compris entre 1 et J et différents de j, ou lorsque la ligne de terminal $LT_j$ est verrouillée ou n'est pas prise et donc le voyant $VV_j$ est allumé ou le voyant $VP_j$ est éteint.

Le panneau d'affichage 24 présente également une autre rangée de trois voyants VD, V71 et VC pour signaler les trois modes de fonctionnement du terminal de téléréunion 1.

Le voyant VD est allumé en réponse au signal de commande $\#*\#$ confirmé par le signal d'acquittement SA, ou en réponse au signal de signalisation B1B ou B3B. Lorsque le mode "additif" est interdit suite à la détection des signaux $\#\#\#$ et SA, ou au signal B2B ou B4B, le voyant VD est éteint.

Le voyant V71 est allumé en réponse au signal de commande $\#1\#$ confirmé par le signal SA, ou en réponse au signal de signalisation B1B ou B2B, afin de signaler qu'une réunion à sept participants au plus peut être entreprise, la ligne $LT_1$ étant réservée à l'organisateur de la réunion. Lorsque le voyant V71 est éteint, ceci signifie que la ligne de terminal $LT_1$ est une ligne téléphonique ordinaire, comme le sont les autres lignes de terminal $LT_2$ à $LT_J$, et n'est plus réservée à l'organisateur.

Le dernier voyant de mode VC est allumé pour signaler le mode de "conférence à J = 8" participants, dans lequel la ligne $LT_1$ peut être appelée par un quelconque participant. L'allumage du voyant VC est déclenché en réponse au signal de commande $*1*$ confirmé par le signal d'acquittement SA, ou en réponse au signal de signalisation B3B ou B4B. Le voyant VC est éteint lorsque le voyant V71 est allumé, les voyants V71 et VC ne pouvant jamais être allumés simultanément.

Les divers voyants inclus dans le panneau d'affichage 24 peuvent être des diodes LED, ou bien des barrettes à cristaux liquides.

Dans les opérations et traitements de signaux codés décrits ci-dessus, seul le détecteur de signaux en code à multifréquence $13_1$ attribuable à l'organisateur OR de la téléréunion intervient dans le terminal 2. Des "commandes" émanant des postes téléphoniques de participant $PPA_2$ à $PPA_J$ relatives aux appels (mode rendez-vous) et libérations de lignes téléphoniques $LT_2$ à $LT_j$ sont en effet détectées par l'intermédiaire des joncteurs $11_2$ à $11_J$.

Le rôle des détecteurs $13_2$ à $13_J$ vis-à-vis "d'indications" provenant des postes des participants est maintenant développé. Ces indications sont essentiellement de deux natures, l'une étant relative à une demande d'intervention d'un participant, ou d'un groupe de participants s'il s'agit d'une multiréunion, l'autre étant relative à une information demandée par l'organisateur à un participant.

Il est supposé qu'au cours d'une réunion, le signal de parole transmis par le participant $PA_2$, ou par le groupe de participants $PA_2$ en débat interne, soit seulement diffusé vers les autres postes de participant $PPA_1$ = PO et $PPA_3$ à $PPA_J$. Les commutateurs analogiques $14_1$ et $14_3$ à $14_J$ sont ouverts, et seul le commutateur $14_2$ est l'état fermé afin que les sommateurs $15_1$ et $15_3$ à $15_J$ diffusent le signal de parole du participant $PA_2$ vers les postes PO et $PPA_3$ à $PPA_J$. Ces états de commutateurs $14_1$ à $14_J$ résultent d'un signal de commande $*2*$ transmis par le poste d'organisateur PO et détecté par le détecteur $13_1$, et de l'activation du fil $141_2$ à l'état "1" et de la désactivation des fils $141_1$ et $141_3$ à $141_J$ à l'état "0" par le circuit de commande 10. Les participants $PA_1$ = PO et $PA_3$ à $PA_J$ ne sont donc que des "auditeurs simples". Le voyant $VA_2$ est à l'état allumé.

Puis, l'un des autres participants, par exemple le participant $PA_5$ désire intervenir pendant le discours du participant $PA_2$. Le participant intervenant $PA_5$ sollicite la touche N°5 sur le clavier de son poste $PPA_5$, correspondant au numéro de la ligne de terminal $LT_5$ attribuée à ce participant. Un signal d'indication codé SI [770 Hz + 1.336 Hz] correspondant à la touche N°5 est décodé dans le détecteur $13_5$ en un mot binaire appliqué au circuit de commande 10. Ce dernier compare le mot binaire avec un numéro codé binaire correspondant de la ligne $LT_5$ lu en mémoire morte, et valide la demande d'intervention du participant $PA_5$ s'il y a concordance entre le numéro de touche et le numéro de ligne. Cette validation est traduite en l'émission du chiffre N°5 en code à multifréquence par l'émetteur 16 à travers le sommateur $15_1$. Le récepteur 22 dans la console 2 décode le chiffre N°5, et le microcontrôleur 23 commande le clignotement des voyants $VV_5$, $VP_5$ et $VA_5$, ou au moins de l'un d'entre eux selon une autre variante, placés dans la rangée N°5 du panneau 24. L'organisateur OR est ainsi informé de la demande d'intervention du participant $PA_5$.

Il est noter que sans la console 2 selon l'invention, l'organisateur est incapable d'identifier toute demande d'intervention d'un participant ou d'un groupe de participants n'ayant pas la parole. Cette possibilité de détection de numéro de participant et d'identification de participant indépendamment du droit à la parole est importante dans le cas d'une multiréunion où le nombre J de participants est élevé, de l'ordre de plusieurs dizaines de participants, et où il n'est pas envisageable de donner la parole à tous les participants.

Suite à la demande d'intervention du participant intervenant identifié $PA_5$, l'organisateur OR dessert cette demande selon l'une de deux possibilités, immédiatement ou en différé afin de ne pas interrompre le discours

du participant $PA_2$.

Selon une première possibilité, l'organisateur compose au clavier du poste PO la séquence de commande ∗5∗ qui est détectée et décodée dans le détecteur $13_1$ du terminal 1 et le récepteur 22 de la console 2. Le circuit de commande 10 simultanément active le fil $141_5$ à l'état "1" pour fermer le commutateur $14_5$ et désactive le fil $141_2$ à l'état "O" pour ouvrir le commutateur $14_2$, les autres commutateurs $14_1$, $14_3$, $14_4$, et $14_6$ à $14_J$ demeurant ouverts. Le participant, ou le groupe de participants, $PA_5$, peut maintenant parler et sa parole est diffusée vers les autres participants $PA_1$ à $PA_4$ et $PA_6$ à $PA_J$. Le circuit de commande 10 transmet également le signal d'acquittement PA à la console 2, via l'émetteur 16, afin que le microcontrôleur 23 éteigne le voyant $VA_2$, arrête le clignotement des voyants $VV_5$, $VP_5$ et $VA_5$, et commande l'allumage du voyant de parole allouée $VA_5$.

Selon une seconde possibilité, l'organisateur OR décide de composer la séquence de commande ∗O#25∗ afin que les deux participants $PA_2$ et $PA_5$ puissent converser et que leur conversation soit écoutée par les autres participants. Le signal de commande correspondant ∗O#25∗ est détecté dans le détecteur $13_1$ et le récepteur 22. Le circuit de commande 10 ne modifie que l'état du fil $141_5$ pour l'activer et fermer le commutateur $14_5$, le commutateur $14_2$ étant maintenu fermé. Le débat entre les participants $PA_2$ et $PA_5$ est ainsi diffusé vers les autres participants, et les participants $PA_2$ et $PA_5$ reçoivent les signaux de parole émanant des participants $PA_5$ et $PA_2$ respectivement. Le circuit de commande 10 transmet, via l'émetteur 16, le signal d'acquittement SA qui, reçu via le récepteur 22 par le microcontrôleur de console 23, arrête le clignotement des voyants $VV_5$, $VP_5$ et $VA_5$ et commande seulement l'allumage du voyant $VA_5$, le voyant $VA_2$ demeurant allumé.

Des demande d'information par l'organisateur OR et transmission d'information vers l'organisateur OR sont décrites ci-après. Ce type d'opération est sélectionné lorsque les groupes de participants sont à placer "en discussion fractionnée", c'est-à-dire les débats internes des groupes ne sont pas à diffuser, bien que l'organisateur puisse détecter toute demande d'intervention ou collecter des résultats d'un vote de chaque groupe sans que les autres groupes aient connaissance du débat interne ou du vote dudit groupe.

Préalablement, l'organisateur demande à chaque groupe de participants $PA_j$ de transmettre son chiffre d'attribution j suivi de l'information demandée. Cette information est par exemple le résultat d'un vote du groupe sous la forme de l'une des trois réponses "POUR", "CONTRE" et "ABSTENTION" à une question posée. Les trois réponses sont associées respectivement aux voyants VD, V71, et VC comme montré à la Fig. 3.

L'organisateur OR compose la séquence de commande ∗O#∗, ou la séquence ∗∗∗, au clavier du poste PO qui est détectée et décodée dans le détecteur $13_1$ et le récepteur 22. Le circuit de commande 10 désactive tous les fils $141_1$ à $141_J$ qui passent à l'état "O", ce qui ouvrent tous les commutateurs $14_1$ à $14_J$. Aucun signal de parole n'est émis par toutes les voies d'émission $VE_1$ à $VE_J$, et par suite, tous les groupes des participants sont isolés acoustiquement les uns des autres. Par contre tout signal d'indication codé SI transmis par l'un des postes $PPA_1$ à $PPA_J$ peut être détecté dans le terminal 1, et retransmis vers la console 2. Le signal d'acquittement SA transmis par le terminal 1 en réponse à la séquence ∗O#∗ valide cette dernière dans la console 2. Tous les voyants $VA_1$ à $VA_J$ du panneau 24 sont alors éteints.

Chacun $PA_j$ des participants ou groupe de participants actionne alors la touche j puis l'une des touches 1, 2 ou 3 sur le clavier du poste $PPA_j$. Le signal d'indication j est décodé dans le détecteur $13_j$ et validé dans le circuit de commande 10. Suite à cette validation et également à la détection du chiffre de vote 1, 2 ou 3, le chiffre j et le chiffre de vote sont codés et émis par l'émetteur 16 et détectés dans le récepteur de console 22. Le microcontrôleur 23 commande dans le panneau 24 le clignotement des voyants $VV_j$, $VP_j$ et $VA_j$, ou comme déjà dit le clignotement de l'un de ces voyants selon une autre variante, ainsi que l'un des voyants VD, V71 et VC selon que le chiffre de vote est 1, 2 ou 3.

L'organisateur après avoir noté le résultat de vote du participant $PA_j$, acquitte celui-ci en composant la séquence de commande ∗∗j∗ qui est détectée par le détecteur $13_1$. Le circuit de commande 10 d'une part, commande le joncteur $11_j$ afin de transmettre un signal de tonalité prédéterminé correspondant à un carillon dans la ligne de terminal $LT_j$ en direction du poste $PPA_j$, et d'autre part provoque la transmission du signal d'acquittement SA dans la ligne de terminal d'organisateur $LT_1$ afin que le microcontrôleur 23 arrête le clignotement des voyants $VV_j$, $VP_j$ et $VA_j$ et de l'un des voyants VD, V71 et VC correspondant au chiffre de vote.

Il est à noter que, puisque les participants $PA_1$ à $PA_J$ peuvent transmettre quasi-simultanément leur résultat de vote, le circuit de commande 10 mémorise en mémoire-tampon ces résultats afin de les retransmettre à la console 2 selon un ordre de priorité prédéterminé, par exemple selon l'ordre croissant des chiffres 1 à J. Les résultats sont transmis au fur et à mesure en réponse aux signaux d'acquittement ∗∗1∗ à ∗∗J∗ délivrés par le poste PO.

Selon une autre variante, lorsque le terminal 1 est programmé en mode "7 + 1", l'organisateur peut ne pas participer au vote. Dans ce cas, seul le commutateur $14_1$ est fermé, ce qui permet à l'organisateur de demander à chaque participant son résultat de vote.

Selon une autre réalisation, la console de téléréunion 2 est sensiblement modifiée. Un transmetteur de code à multifréquence (MF) est associé au récepteur de code à multifréquence 22 et est connecté entre l'en-

8

roulement secondaire du transformateur 25, lequel devient un coupleur hybride bidirectionnel, et le microcontrôleur 23. Le microcontrôleur 23 est doté d'un clavier de touches de fonction et de touches de chiffre, et d'un écran alphanumérique qui peuvent remplacer ou s'ajouter au panneau d'affichage 24.

La console selon cette seconde réalisation offre les fonctions complémentaires suivantes, sachant que le circuit de commande et signalisation 10 dans le terminal 1 est préprogrammé en correspondance avec ces fonctions.

Préalablement à la transmission de toute séquence prédéterminée SP par la console 2 vers le terminal 1, le transmetteur MF de la console transmet automatiquement une séquence d'identification de console SIC à travers la ligne d'abonné LTO, le réseau RT et la ligne de terminal $LT_1$, qui est détectée dans le détecteur MF $13_1$ et reconnu par le circuit de commande 10. La séquence d'identification comprend notamment des caractères A, B, C et D qui ne sont pas imitables dans tout poste téléphonique classique.

A la suite de cette séquence d'identification, l'organisateur OR compose l'une des séquences prédéterminées SP au moyen du clavier de la console pour la transmettre au terminal. Les séquences SP sont réparties en des premières et secondes séquences. Les premières séquences sont des séquences de commande SPC destinées à commander des fonctions prédéterminées dans le terminal. Les secondes séquences sont des séquences d'interrogation SPI qui provoquent la lecture de paramètres de téléréunion mémorisés dans le circuit de commande 10. Les paramètres lus sont ensuite retransmis sous forme de séquences codées SPT par l'émetteur 16 afin que l'écran de la console visualise les paramètres lus. Des séquences SPC, SPI et SPT sont indiquées ci-après à titre d'exemple.

Des touches de fonction du clavier de la console sont utilisées par l'organisateur OR pour composer un répertoire de participants, et des listes de noms de participant et de numéros d'appel associés respectivement à des téléréunions. Le répertoire et ces listes sont mémorisés dans le microcontrôleur 23 et peuvent être lus sur l'écran de la console, et sont mis à jour ou effacés partiellement ou totalement en mémoire du microcontrôleur, par l'organisateur. Une liste de numéros d'appel pour participants à une téléréunion est ainsi transmise automatiquement par le microcontrôleur 23 à travers le transmetteur MF de la console afin que le circuit de commande 10 dans le terminal mémorise les numéros d'appel de la liste, et compose automatiquement à travers les joncteurs $11_1$ à $11_J$ les numéros d'appel de la liste au début d'un créneau horaire définissant la durée de la téléréunion. Le créneau horaire est fixé par l'organisateur au moyen du clavier de la console et est également transmis sous forme d'une séquence codée SPC par la console au terminal.

Le terminal 1 gère ainsi les horaires des téléréunions demandées par l'organisateur OR, et plus généralement, par divers organisateurs de téléréunion munis chacun d'une console de téléréunion. Des séquences SPC, SPI et SPT sont ainsi échangées entre le terminal et la console, afin que l'organisateur examine des paramètres relatifs à des téléréunions à établir par le terminal et, le cas échéant, de paramètres relatifs à une téléréunion déjà établie par le terminal. L'organisateur consulte des créneaux horaires déjà réservés pour des téléréunions, réserve un créneau horaire pour chaque téléréunion, transmet la liste des numéros d'appel correspondant à cette téléréunion, et annule un créneau horaire déjà réservé par lui-même. Un identificateur de console correspondant à la séquence SIC, une liste correspondante de numéros d'appel et un identificateur de liste sont ainsi associés à chaque créneau horaire.

Grâce à l'écran alphanumérique de la console, l'organisateur est guidé par des informations affichées, mémorisées dans le microcontrôleur 23 et dans le terminal 1, pour organiser et surveiller des téléréunions. Ces informations sont par exemple :

- la durée d'activité en parole pour chaque ligne de terminal $LT_1$ à $LT_J$ cumulée pendant une téléréunion;
- la durée de communication téléphonique pour chaque ligne de terminal au cours d'une téléréunion afin notamment de facturer le service de téléréunion;
- le répertoire des participants incluant leurs noms et numéros d'appel;
- les listes de numéros d'appel chaînés avec les identificateurs de liste;
- l'historique des dernières téléréunions, par exemple des cinq dernières, organisées par l'organisateur OR avec la console 2;
- les créneaux horaires libres pour permettre notamment, outre la réservation d'une prochaine téléréunion, la prolongation d'une téléréunion en cours.

## Revendications

1. Système de téléréunion téléphonique comprenant un terminal (1) relié au réseau téléphonique (RT) par une pluralité de lignes téléphoniques de terminal ($LT_1$ - $LT_J$) en nombre égal au nombre maximum (J) de participants à une téléréunion, chacun des participants ($PA_1$ - $PA_J$), y compris un organisateur (OR) de la téléréunion, étant muni d'un poste téléphonique ($PPA_1$ - $PPA_J$) associé à des moyens pour générer des signaux codés à multifréquence et desservi sélectivement par l'une des lignes de terminal à travers le réseau téléphonique, l'une (LT$_1$) desdites lignes téléphoniques de terminal étant assignée audit organisateur de téléréunion,

ledit terminal (1) comprenant plusieurs moyens d'établissement et de rupture de communication (11$_1$ - 11$_J$) desservant respectivement lesdites lignes de terminal (LT$_1$ - LT$_J$) pour prendre les lignes de terminal et appeler les participants sous la commande du poste (PO = PPA$_1$) de l'organisateur et pour répondre à des appels des postes des participants et communiquer lesdits appels au poste de l'organisateur, des moyens de commutation et diffusion (14$_1$, 15$_1$ - 14$_J$, 15$_J$) reliés aux plusieurs moyens d'établissement et de rupture de communication pour diffuser sélectivement, sous la commande du poste de l'organisateur, des signaux vocaux émanant d'au moins l'un des postes de participant vers les autres postes de participant au cours de la téléréunion, un détecteur à code multifréquence (13$_1$) relié à l'un des plusieurs moyens d'établissement et de rupture de communication (11$_1$) desservant ladite ligne de terminal d'organisateur (LT$_1$) pour décoder des signaux de commande codés (SC) transmis par le poste d'organisateur (PO) en des signaux de commande décodés, et un circuit de commande (10) pour établir et rompre des communications entre les participants et l'organisateur à travers lesdits moyens d'établissement et de rupture de communication et pour sélectionner au moins l'un desdits postes de participant dont des signaux vocaux sont à diffuser vers les autres postes, en fonction desdits signaux de commande décodés,

caractérisé en ce que

- le terminal (1) comprend en outre un émetteur à code multifréquence (16) relié audit moyen d'établissement et de rupture de communication (11$_1$) desservant la ligne de terminal d'organisateur (LT$_1$) pour coder des signaux de signalisation (SS) établis par le circuit de commande (10) de manière à transmettre des signaux de signalisation codés vers le poste téléphonique d'organisateur (PO), et
- ledit système comprend une console (2) pour l'organisateur, ladite console incluant des moyens de réception à code multifréquence (21, 22) connectables à une ligne téléphonique d'abonné (LTO) desservant le poste d'organisateur (PO) pour détecter des prises et libérations de la ligne d'abonné (LTO) et décoder lesdits signaux de commande codés (SC) et lesdits signaux de signalisation codés (SS), des moyens d'affichage (24), et des moyens de commande (23) pour commander l'affichage d'informations en réponse respectivement aux signaux de commande et de signalisation décodés dans les moyens de réception.

2. Système de téléréunion conforme à la revendication 1, caractérisé en ce que le circuit de commande (10) dans le terminal (1) transmet un signal d'acquittement (SA) codé par ledit émetteur (16) dans ladite ligne de terminal d'organisateur (LT$_1$) en réponse à chacun desdits signaux de commande (SC), et lesdits moyens de commande (23) dans la console ne commandent l'affichage d'une information correspondant au signal de commande (SC) que lorsque le signal d'acquittement (SA) est décodé par les moyens de réception (21, 22).

3. Système de téléréunion conforme à la revendication 1 ou 2, caractérisé en ce que ledit affichage d'information n'est pas commandé lorsqu'un signal d'acquittement (SA) n'est pas décodé pendant une période prédéterminée (TA) succédant au décodage de l'un des signaux de commande (SC) dans les moyens de réception (21, 22).

4. Système de téléréunion conforme à l'une quelconque des revendications 1 à 3, caractérisé en ce que les signaux de signalisation (SS) supportent au moins l'une des informations relatives à des modes de fonctionnement (B1B - B4B) du terminal (1) et à des prises et libérations (CjC, DjD) desdites lignes téléphoniques de terminal (LT$_j$).

5. Système de téléréunion conforme à l'une quelconque des revendications 1 à 4, caractérisé en ce que les moyens d'affichage (24) comprennent trois voyants (VV$_j$, VP$_j$, VA$_j$) qui sont associés à chacune des lignes de terminal et qui sont respectivement allumés en réponse à un signal de commande (#j#) commandant une inaccessibilité du terminal par ladite ligne, un signal de signalisation (CjC) signalant la prise de ladite ligne de terminal par le participant associé, et un signal de commande (*j*) commandant une diffusion de signaux vocaux au moins du poste de participant (PPA$_j$) desservi par ladite ligne de terminal vers les autres postes.

6. Système de téléréunion conforme à l'une quelconque des revendications 1 à 5, caractérisé en ce que les moyens d'affichage (24) comprennent des voyants (VD, V71, VC) qui sont allumés respectivement en

EP 0 515 241 B1

réponse à des signaux de commande (SC) qui programment des modes de fonctionnement dans le terminal (1) et à des signaux de signalisation (BOB - B4B) qui signalent des modes de fonctionnement préprogrammés dans le terminal.

7. Système de téléréunion conforme à l'une quelconque des revendications 1 à 6, caractérisé en ce que les signaux de signalisation (SS) sont composés de combinaisons de fréquences différentes de celles générées par lesdits moyens pour générer des signaux codés à multifréquence inclus dans les postes téléphoniques (PPA$_1$ - PPA$_J$).

8. Système de téléréunion conforme à l'une quelconque des revendications 1 à 7, caractérisé en ce que le terminal (1) comprend en outre une pluralité de détecteurs à code multifréquence (13$_2$ - 13$_J$) respectivement reliés aux moyens d'établissement et de rupture de communication (11$_2$ - 11$_J$) pour décoder des signaux d'indication (SI) établis et transmis par des postes de participant, y compris des postes dont les participants sont placés en écoute simple et n'ont pas le droit à la parole sous la commande du poste d'organisateur, le circuit de commande (10) retransmettant les signaux d'indication à travers ledit émetteur (16) vers le poste téléphonique de l'organisateur (PO) afin que les moyens d'affichage (24) dans la console affichent des indications supportées par les signaux d'indication retransmis.

9. Système de téléréunion conforme à la revendication 8, caractérisé en ce que, pour formuler une demande d'intervention par un participant intervenant (PA$_j$) à la téléréunion,
   le poste (PPA$_j$) du participant intervenant transmet un signal d'indication codé (j) en réponse à la sollicitation de touche de clavier du poste correspondant à un numéro de la ligne téléphonique de terminal (LT$_j$) à travers laquelle communique le participant,
   les moyens d'affichage (24) dans la console (2) affichent une identification de la ligne en réponse au signal d'indication codé (j) retransmis par le circuit de commande du terminal, et
   le poste d'organisateur (PO) transmet un signal de commande prédéterminé (∗j∗; ∗O#.j∗) afin que le circuit de commande (10) dans le terminal (1) commande au moins une diffusion de signaux vocaux du participant intervenant (PPA$_j$) vers les autres postes de participant.

10. Système de téléréunion conforme aux revendications 5 et 9, caractérisé en ce que le signal d'indication codé retransmis (j) déclenche dans les moyens d'affichage (24) le clignotement au moins de l'un des voyants (VV$_j$, VP$_j$, VA$_j$) associés à la ligne téléphonique de terminal (LT$_j$) à travers laquelle communique le participant intervenant (PA$_j$)

11. Système de téléréunion conforme à l'une quelconque des revendications 9 ou 10, caractérisé en ce que le numéro de ligne (j) supporté par le signal d'indication codé (SI) transmis par le poste de participant (PPA$_j$) est validé par comparaison à un numéro de ligne mémorisé dans le circuit de commande (10) avant que le circuit de commande du terminal retransmette le signal d'indication codé vers la console (2).

12. Système de téléréunion conforme à l'une quelconque des revendications 8 à 11, caractérisé en ce que, pour formuler une demande de transmission d'information destinée aux participants (PA$_j$),
   le poste d'organisateur (PO) transmet un signal de commande (∗O#∗) afin que le circuit de commande (10) interdise toute diffusion de signaux vocaux par les moyens de commutation et diffusion (14$_1$, 15$_1$ - 14$_J$, 15$_J$),
   chacun des postes de participant (PPA$_j$) transmet un signal d'indication codé (SI) supportant respectivement le numéro (j) de la ligne téléphonique de terminal (LT$_j$) à travers laquelle communique le participant (PA$_j$) du poste et une information respective (chiffre de vote), et
   les moyens d'affichage (24) dans la console (2) affichent une identification de la ligne et ladite information en réponse au signal d'indication codé retransmis par le circuit de commande de terminal.

13. Système de téléréunion conforme aux revendications 5 et 12, caractérisé en ce que le signal d'indication codé retransmis (SI) résultant de la demande de transmission d'information déclenche dans les moyens d'affichage (24) le clignotement au moins de l'un des voyants (VV$_j$, VP$_j$, VA$_j$) associés à la ligne téléphonique de terminal (LT$_j$) à travers laquelle communique le participant (PA$_j$) et de l'un d'autres voyants (VD, V71, VC) dans les moyens d'affichage correspondant à ladite information respective.

14. Système de téléréunion conforme à la revendication 12 ou 13, caractérisé en ce que le poste d'organisateur (PO) transmet un signal de commande prédéterminé (∗∗j∗) après l'affichage de l'information éma-

11

nant du participant (PA$_j$) afin que le circuit de commande (10) dans le terminal commande la transmission d'un signal de tonalité par les moyens d'établissement et de rupture de communication (11$_j$) assignés au participant vers le poste du participant (PPA$_j$).

15. Système de téléréunion conforme à l'une quelconque des revendications 1 à 14, caractérisé en ce que ladite console (2) comprend en outre :
   - des moyens de transmission à code multifréquence connectés entre la ligne téléphonique d'abonné (LTO) desservant le poste d'organisateur (PO) et lesdits moyens de commande (23) pour transmettre des premières et secondes séquences prédéterminées (SPC, SPI) précédées chacune d'une séquence d'identification de console (SIC) vers le terminal (1),
   - des moyens reliés aux moyens de commande (23) pour composer lesdites premières et secondes séquences à transmettre au terminal (1), et
   - des moyens reliés aux moyens de commande pour visualiser des informations relatives aux premières séquences(SPC), et des informations supportées par des séquences de paramètres de téléréunion (SPT) transmises par le circuit de commande (10) et codées par l'émetteur à code multifréquence (16) dans le terminal en réponse aux secondes séquences (SPI).

16. Système de téléréunion conforme à la revendication 15, dans lequel les premières séquences (SPC) sont relatives à des listes de numéros d'appel de participant et des créneaux horaires respectivement associés à des téléréunions afin que le circuit de commande (10) mémorise chacune des listes de numéro d'appel et le créneau horaire respectif et compose automatiquement, à travers les moyens d'établissement et de rupture de communication (11$_1$ - 11$_J$), les numéros d'appel de la liste au début dudit créneau horaire respectif.

17. Système conforme à la revendication 15 ou 16 dans lequel les séquences de paramètres de téléréunion (SPT) sont relatives à des paramètres de téléréunions à établir par ledit terminal et des paramètres d'une téléréunion établie par ledit terminal.

## Patentansprüche

1. Fernsprechkonferenzsystem beinhaltend ein Terminal (1), das durch eine Mehrzahl von Terminalfernsprechleitungen (LT$_1$ - LT$_J$) mit dem Telefonnetz (RT) verbunden ist, deren Anzahl der maximalen Anzahl (J) von Teilnehmern an einer Telefonkonferenz entspricht, wobei jeder der Teilnehmer (PA$_1$ - PA$_J$), einschließlich eines Oraganisators (OR) der Telefonkonferenz, mit einem Fernsprechapparat (PPA1 - PPAJ) ausgestattet ist, der mit Mitteln zur Erzeugung von multifrequenz-codierten Signalen assoziiert ist und selektiv durch eine der Terminalleitungen durch das Telefonnetz hindurch versorgt wird, wobei die eine (LT$_1$) besagter Terminalfernsprechleitungen besagtem Organisator der Telefonkonferenz zugeteilt wird, besagtes Terminal (1) enthaltend mehrere Mittel zur Erstellung und Unterbrechung von Vermittlung (11$_1$- 11$_J$) , welche jeweils besagte Terminalfernsprechleitungen (LT$^1$ - LT$_J$) versorgen, um die Terminalleitungen zu belegen und die Teilnehmer unter der Steuerung des Apparats (PO = PPA$_1$) des Organisators anzurufen, und um auf Anrufe von den Apparaten der Teilnehmer zu antworten, und besagte Anrufe dem Apparat des Organisators zu vermitteln, Mittel zur Umschaltung und Sendung (14$_1$, 15$_1$ - 14$_J$, 15$_J$), die mit den mehreren Mitteln zur Erstellung und Unterbrechung der Vermittlung, um selektiv unter der Steuerung des Apparats des Organisators Stimmsignale, die aus mindestens einem Teilnehmerapparat herkommen, zu den anderen Teilnehmerapparaten während der Telefonkonferenz zu senden, einen multifrequenz-codierten Detektor (13$_1$), der mit dem einen der mehreren Mittel zur Erstellung und Unterbrechung der Vermittlung (11$_1$) verbunden ist, das besagte Leitung des Terminals des Organisators (LT1) versorgt, damit codierte Steuersignale (SC), die durch den Apparat des Organisators (PO) übertragen werden, zu decodierten Steursignalen decodiert werden, und einen Steuerkreis (10), um Vermittlungen zwischen den Teilnehmern und dem Organisator durch besagte Mittel zur Vermittlungserstellung und -unterbrechung zu erstellen und unterbrechen und um mindestens den einen besagter Teilnehmerapparate, dessen Stimmsignale zu den anderen Apparaten zu senden sind, im Verhältnis zu besagten decodierten Steuersignalen auszuwählen,
dadurch gekennzeichnet, daß
   - das Terminal (1) außerdem einen multifrequenz-codierten Sender (16) enthält, der mit besagtem Mittel zur Erstellung und Unterbrechung von Vermittlung (11$_1$) verbunden ist, das die Terminalleitung des Organisators (LT$_1$) versorgt, um vom Steuerkreis (10) erstellte Anzeigesignale (SS) zu codieren,

12

sodaß codierte Anzeigesignale zu dem Fernsprechapparat des Organisators (PO) übertragen werden, und

- besagtes System eine Konsole (2) für den Organisator enthält, welche multifrequenz-codierte Empfangsmittel (21, 22) einschließt, die mit einer den Apparat des Organisators (PO) versorgenden Teilnehmer fernsprechleitung (LTO) verbindbar sind, um Belegung und Freigabe der Teilnehmerleitung LTO zu erkennen und besagte codierte Steuersignale (SC), besagte codierte Anzeigesignale (SS), Anzeigemittel (24) und Steuermittel (23) zu decodieren, damit die Anzeige von Informationen jeweils als Antwort auf die decodierten Steuer- und Anzeigesignale in den Empfangsmitteln gesteuert wird.

2. Fernsprechkonferenzsystem nach Anspruch 1, dadurch gekennzeichnet, daß der Steuerkreis (10) im Terminal (1) ein vom besagten Sender (16) in besagter Terminalleitung des Organisators ($LT_1$) codiertes Bestätigungssignal (SA) überträgt, als Antwort auf jedes der Steuersignale (SC), und daß besagte Steuermittel (23) in der Konsole erst die Anzeige einer dem Steuersignal (SC) entsprechenden Information steuern, wenn das Bestätigungssignal (SA) durch die Empfangssignale (21, 22) decodiert ist.

3. Fernsprechkonferenzsystem nach Anspruch 1 oder 2, dadurch gekennzeichnet, daß besagte Informationsanzeige nicht gesteuert wird, wenn ein Bestätigungssignal (SA) während einer vorgegebenen Periode (TA) nicht decodiert wird, die der Decodierung des einen der Steuersignale (SC) in den Empfangsmitteln (21, 22) folgt.

4. Fernsprechkonferenzsystem nach irgendeinem der Ansprüche 1 bis 3, dadurch gekennzeichnet, daß die Anzeigesignale (SS) mindestens eine der Informationen trägt, die sich auf Betriebsarten (B1B - B4B) des Terminals (1) und auf die Belegung oder Freigabe (CjC, DjD) besagter Terminalfernsprechleitungen ($LT_j$) beziehen.

5. Fernsprechkonferenzsystem nach irgendeinem der Ansprüche 1 bis 4, dadurch gekennzeichnet, daß die Anzeigemittel (24) drei Anzeigelampen ($VV_j$, $VP_j$, $VA_j$) enthalten, die mit jeder der Terminalleitungen assoziiert sind, und die jeweils als Antwort auf ein Steuersignal (#j#) beleuchtet werden, welches ein Unzugänglichkeit des Terminals durch besagte Leitung steuert, wobei ein Anzeigesignal (CjC) die Belegung besagter Terminalleitung durch den assoziierten Teilnehmer signalisiert, und ein Steuersignal (∗j∗) eine Sendung der Stimmsignale, mindestens vom Teilnehmerapparat ($PPA_j$), der durch besagte Terminalleitung versorgt wird, zu den anderen Apparaten steuert.

6. Fernsprechkonferenzsystem nach irgendeinem der Ansprüche 1 bis 5, dadurch gekennzeichnet, daß die Anzeigemittel (24) Anzeigelampen (VD, V71, VC) enthalten, die jeweils als Antwort auf Steuersignale (SC) beleuchtet werden, welche Betriebsarten im Terminal (1) programmieren, und auf Anzeigesignale (B0B - B4B), die im Terminal vorprogrammierte Betriebsarten anzeigen.

7. Fernsprechkonferenzsystem nach irgendeinem der Ansprüche 1 bis 6, dadurch gekennzeichnet, daß die Anzeigesignale (SS) aus Kombinationen von Frequenzen bestehen, die sich von denen unterscheiden, die durch besagte Mittel zur Erzeugung von multifrequenz-codierten Signalen erzeugt werden, welche in den Fernsprechapparaten ($PPA_1$ - $PPA_J$) eingeschlossen sind.

8. Fernsprechkonferenzsystem nach irgendeinem der Ansprüche 1 bis 7, dadurch gekennzeichnet, daß das Terminal (1) außerdem eine Mehrzahl von multifrequenz-codierten Detektoren ($13_2$ - $13_J$) enthält, die jeweils mit den Mitteln zur Erstellung und Unterbrechung von Vermittlungen ($11_2$ - $11_J$) verbunden sind, um Mitteilungssignale (SI) zu decodieren, die durch Teilnehmerapparate erstellt und übertragen werden, einschließlich Apparate, deren Teilnehmer der Steuerung des Organisators unterstehen, und nur lauthören konnen aber kein Recht auf Sprechen haben, wobei der Steuerkreis (10) die Mitteilungssignale durch besagten Sender (16) hindurch zum Fernsprechapparat des Organisators (PO) weitersendet, damit die Anzeigemittel (24) in der Konsole Mitteilungen anzeigen, die durch die weitergesendeten Mitteilungssignale getragen werden.

9. Fernsprechkonferenzsystem nach Anspruch 8, dadurch gekennzeichnet, daß, um eine Interventionsanforderung durch einen während der Konferenz sich einmischenden Teilnehmer ($PA_j$) zu formulieren, der Apparat ($PPA_j$) des sich einmischenden Teilnehmers ein codiertes Mitteilungssignal (j) überträgt, als Antwort auf die Beanspruchung der einer Nummer der Terminalfernsprechleitung ($LT_j$) entsprechenden Tastaturtaste des Apparats, durch welche die Vermittlung des Teilnehmers zustandekommt, die Anzeigemittel (24) in der Konsole (2) eine Identifizierung der Leitung anzeigen, als Antwort auf das codierte Mitteilungssignal (j), das durch den Steuerkreis des Terminals weitergesendet wird, und
der Apparat des Organisators (PO) ein vorgegebenes Steuersignal (∗j∗; ∗O#·j∗) überträgt, damit der Steuerkreis (10) im Terminal (1) mindestens eine Sendung von Stimmsignalen seitens des sich einmischenden Teilnehmers (PPA$_j$) zu den anderen Teilnehmerapparaten steuert.

10. Fernsprechkonferenzsystem nach den Ansprüchen 5 und 9, dadurch gekennzeichnet, daß das codierte weitergesendete Mitteilungssignal (j) in den Anzeigemitteln (24) das Blinken mindestens einer Anzeigelampe (VV$_j$, VP$_j$, VA$_j$) auslöst, die mit der Terminalfernsprechleitung (LT$_j$) assoziiert sind, durch welche die Vermittlung des sich einmischenden Teilnehmers (PA$_j$) zustandekommt.

11. Fernsprechkonferenzsystem nach irgendeinem der Ansprüche 9 oder 10, dadurch gekennzeichnet, daß die vom codierten Mitteilungssignal (SI) getragene Nummer der Leitung (j), die durch den Teilnehmerapparat (PPA$_j$) übertragt wird, durch Vergleich mit einer Leitungsnummer im Steuerkreis (10) bestätigt wird, bevor der Regelkreis des Terminals das codierte Mitteilungssignal zu der Konsole (2) weitersendet.

12. Fernsprechkonferenzsystem nach irgendeinem der Ansprüche 8 bis 11, dadurch gekennzeichnet, daß, um die Anforderung der Übertragung einer für die Teilnehmer (PA$_j$) bestimmten Information zu formulieren,
der Apparat des Organisators (PO) ein Steuersignal (∗o#∗) überträgt, damit der Steuerkreis (10) jede Sendung der Stimmsignale durch die Umschaltungs- und Sendungsmittel (14$_1$, 15$_1$ - 14$_J$, 15$_J$), verbietet,
jeder der Teilnehmerapparate (PPA$_j$) ein codiertes Mitteilungssignal (SI) überträgt, das jeweils die Nummer (j) der Terminalfernsprechleitung (LT$_j$), durch welche die Vermittlung des Teilnehmers (PA$_j$) des Apparats zustandekommt, und eine entsprechende Information (Wahlnummer) trägt, und
die Anzeigemittel (24) in der Konsole (2) eine Indentifizierung der Leitung und besagte Information anzeigen als Antwort auf das codierte Mitteilungssignal, das vom Terminalteuerkreis weitergesendet wird.

13. Fernsprechkonferenzsystem nach den Ansprüchen 5 und 12, dadurch gekennzeichnet, daß das codierte, weitergesendete Mitteilungssignal (SI), das aus der Anforderung der Informationsübertragung erfolgt, in den Anzeigemitteln (24) das Blinken mindestens einer der Anzeigelampen (VV$_j$, VP$_j$, VA$_j$) auslöst, die mit der Terminalfernsprechleitung (LT$_j$) assoziiert sind, durch welche die Vermittlung des Teilnehmers (PA$_j$) zustandekommt, und einer der anderen Lampen (VD, V71, VC) in den besagter jeweiliger Information entsprechenden Anzeigemitteln.

14. Fernsprechkonferenzsystem nach dem Anspruch 12 oder 13, dadurch gekennzeichnet, daß der Apparat des Organisators (PO) ein vorgegebenes Steuersignal (∗∗j∗) nach der Anzeige der vom Teilnehmer (PA$_j$) kommenden Information überträgt, damit der Steuerkreis (10) im Terminal die Übertragung eines Tonsignals durch die dem Teilnehmer zugeteilten Mittel zur Erstellung und Unterbrechung von Vermittlung (11$_j$) zu dem Teilnehmerapparat (PPA$_j$) steuert.

15. Fernsprechkonferenzsystem nach irgendeinem der Ansprüche 1 bis 14, dadurch gekennzeichnet, daß besagte Konsole (2) außerdem enthält:
   - Übertragungsmittel mit Multifrequenz-Code, die zwischen der den Apparat des Organisators (PO) versorgenden Teilnehmerfernsprechleitung (LTO) und besagten Steuermitteln (23) eingeschaltet sind, um erste und zweite vorgegebene Sequenzen (SPC, SPI) zum Terminal zu übertragen, deren je eine Konsole-Identifizierungssequenz (SIC) zum Terminal (1) vorangeht,
   - Mittel, die mit den Steuermitteln (23) verbunden sind, um besagte dem Terminal (1) zu übertragenden erste und zweite Sequenzen einzugeben, und
   - Mittel, die mit den Steuerungsmitteln verbunden sind, um Informationen bezüglich der ersten Sequenzen (SPC) und Informationen, die von den Sequenzen der Parameter der Telefonkonferenz (SPT) getragen werden, anzuzeigen, welche Sequenzen durch den Steuerkreis (10) übertragen und durch den Sender mit Multifrequenz-Code (16) im Terminal codiert sind, als Antwort auf die zweiten Sequenzen (SPI).

16. Fernsprechkonferenzsystem nach Anspruch 15, in welchem sich die ersten Sequenzen (SPC) auf Listen der Anrufnummern von Teilnehmern und auf jeweils mit Telefonkonferenzen assoziierte Zeitfelder beziehen, damit der Steuerkreis (10) jede der Anrufnummerlisten und das jeweilige Zeitfeld speichert und, durch die Mittel zur Erstellung und Unterbrechung von Verbindung (11$_1$ - 11$_J$) die Anrufnummer der Liste am Anfang des jeweiligen besagten Zeitfeldes automatisch wählt.

17. System nach dem Anspruch 15 oder 16, in welchem sich die Sequenzen der Parameter der Telefonkonferenz (SPT) auf vom besagten Terminal zu erstellende Parameter der Telefonkonferenz und auf Parameter einer vom besagten Terminal erstellten Telefonkonferenz beziehen.

## Claims

1. Telephonic telemeeting system comprising a terminal (1) connected to the telephone network (RT) via a plurality of terminal telephone lines ($LT_1$ - $LT_J$) equal in number to the maximum number (J) of participants at a telemeeting, each of the participants ($PA_1$ - $PA_J$), including an organizer (OR) of the telemeeting, disposing of a telephone set ($PPA_1$ - $PPA_J$) associated with multifrequency-code signal generating means and selectively serviced by one of the terminal lines through the telephone network, one ($LT_1$) of said terminal telephone lines being attributed to said telemeeting organizer,

said terminal (1) comprising plural communication setting-up and cutting-off means ($11_1$ - $11_J$) respectively servicing said terminal lines ($LT_1$ - $LT_J$) for seizing the terminal lines and calling the participants under the control of the organizer set (PO = $PPA_1$) and for answering calls from the participants sets and transmitting said calls to the organizer set, switching and broadcasting means ($14_1$, $15_1$ - $14_J$, $15_J$) connected to the plural communication setting-up and cutting-off means for selectively broadcasting, under the control of the organizer set, voice signals coming from at least one of the participant sets to the other participant sets during the telemeeting, a multifrequency-code detector ($13_1$) connected to one of the plural communication setting-up and cutting-off means ($11_1$) servicing said organizer terminal line ($LT_1$) for decoding encoded command signals (SC) transmitted from the organizer set (PO) into decoded command signals, and a control circuit (10) for setting-up and cutting-off communications between the participants and the organizer via said communication setting-up and cutting-off means and for selecting at least one of said participant sets whose voice signals are to be broadcast to the other sets, as a function of said decoded command signals,

characterized in that

- the terminal (1) further comprising a multifrequency-code transmitter (16) connected to said communication setting-up and cutting-off means ($11_1$) servicing the organizer terminal line ($LT_1$) for encoding signalling signals (SS) derived by the control circuit (10) thereby transmitting encoded signalling signals to the organizer telephone set (PO), and
- said system comprising a console (2) for the organizer, said console including multifrequency-code reception means (21, 22) connectable to a subscriber telephone line (LTO) servicing the organizer set (PO) for detecting seizings and releasings of the subscriber line (LTO) and for decoding said encoded command signals (SC) and said encoded signalling signals (SS), displaying means (24), and controlling means (23) for controlling the display of informations in response respectively to the command and signalling signals decoded in the reception means.

2. Telemeeting system according to claim 1, characterized in that the control circuit (10) in the terminal (1) transmits an acknowledgement signal (SA) encoded by said transmitter (16) in said organizer terminal line ($LT_1$) in response to each of said command signals (SC), and said controlling means (23) in the console only controls the display of an information corresponding to the command signal (SC) when the acknowledgement signal (SA) is decoded by the reception means (21, 22).

3. Telemeeting system according to claim 1 or 2, characterized in that said display of information is not controlled when an acknowledgement signal (SA) is not decoded during a predetermined period (TA) following the decoding of one of the command signals (SC) in the reception means (21, 22).

4. Telemeeting system according to any one of claims 1 to 3, characterized in that the signalling signals (SS) carry at least one of the informations relating to operating modes (B1B - B4B) of the terminal (1) and to seizings and releasings (CjC, DjD) of said terminal telephone lines ($LT_j$).

5. Telemeeting system according to any one of claims 1 to 4, characterized in that the displaying means (24) comprise three indicator lights (VVj, VPj, VAj) which are associated to each of the terminal lines and which are respectively lighted in response to a command signal (#j#) commanding an inaccessibility of the terminal by said line, a signalling signal (CjC) indicating the seizing of said terminal line by the associated

15

participant, and a command signal (*j*) commanding a broadcasting of voice signals at least from the set of participant (PPA$_j$) serviced by said terminal line to the other sets.

6. Telemeeting system according to any one of claims 1 to 5, characterized in that the displaying means (24) comprise indicator lights (VD, V71, VC) that are lighted respectively in response to command signals (SC) which program operating modes in the terminal (1) and to signalling signals (BOB - B4B) which indicate operating modes preprogrammed in the terminal.

7. Telemeeting system according to any one of claims 1 to 6, characterized in that the signalling signals (SS) are composed of frequency combinations other than those generated by said multifrequency-code signal generating means included in the telephone sets (PPA$_1$ - PPA$_J$).

8. Telemeeting system according to any one of claims 1 to 7, characterized in that the terminal (1) further comprises a plurality of multifrequency-code detectors (13$_2$ - 13$_J$) respectively connected to the communication setting-up and cutting-off means (11$_2$ - 11$_J$) for decoding indication signals (SI) derived and transmitted by participant sets, including sets whose the participants are only listening in and do not have the right to speack under the control of the organizer set, the control circuit (10) retransmitting the indication signals via said transmitter (16) to the organizer telephone set (PO) whereby the displaying means (24) in the console display indications carried by the indication signals retransmitted.

9. Telemeeting system according to claim 8, characterized in that, in order to formulate an intervention request by an intervening participant (PA$_j$) at the telemeeting,
   the intervening participant set (PPAj) transmits an encoded indication signal (j) in response to the pressing of keyboard keys of the set corresponding to a number of the terminal telephone line (LT$_j$) through which the participant is communicating,
   the displaying means (24) in the console (2) display an identification of the line in response to the encoded indication signal (j) retransmitted by the control circuit of the terminal, and
   the organizer set (PO) transmits a predetermined command signal (*j* ; *O#.j*) whereby the control circuit (10) in the terminal (1) controls at least a broadcasting of voice signals from the intervening participant (PPA$_j$) to the other participant sets.

10. Telemeeting system according to claims 5 and 9, characterized in that the retransmitted encoded indication signal (j) triggers in the displaying means (24) the flashing of at least one of the indicator lights (VV$_j$, VP$_j$, VA$_j$) associated with the terminal telephone line (LT$_j$) through which the intervening participant (PA$_j$) is communicating.

11. Telemeeting system according to any one of claims 9 or 10, characterized in that the line number (j) carried by the encoded indication signal (SI) transmitted by the participant set (PPA$_j$) is enabled by comparison with a line number memorized in the control circuit (10) before the control circuit in the terminal retransmits the encoded indication signal to the console (2).

12. Telemeeting system according to any one of claims 8 to 11, characterized in that in order to formulate an information transmission request intended for the participants (PA$_j$),
   the organizer set (PO) transmits a command signal (*O#*) for the control circuit (10) to prohibit all broadcasting of voice signals by the switching and broadcasting means (14$_1$, 15$_1$ - 14$_J$, 15$_J$),
   each of the participant sets (PPA$_j$) transmits an encoded indication signal (SI) respectively carrying the number (j) of the terminal telephone line (LT$_j$) through which the participant (PA$_j$) is communicating from the set, and a respective information (vote number), and
   the display means (24) in the console (2) display an identification of the line and said information in response to the encoded indication signal retransmitted by the control circuit of terminal.

13. Telemeeting system according to claims 5 and 12, characterized in that the retransmitted encoded indication signal (SI) resulting from the information transmission request triggers in the display means (24) the flashing of at least one of the indicator lights (VV$_j$, VP$_j$, VA$_j$) associated with the terminal telephone line (LT$_j$) through which the participant (PA$_j$) is communicating and of one of other indicator lights (VD, V71, VC) in the display means corresponding to said respective information.

14. Telemeeting system according to claim 12 or 13, characterized in that the organizer set (PO) transmits a

16

predetermined command signal (**j*) subsequent to the displaying of the information coming from the participant (PA$_j$) whereby the control circuit (10) in the terminal controls the transmission of a tone signal by the communication setting-up and-cutting off means (11$_j$) assigned to the participant towards the set of the participant (PPA$_j$).

15. Telemeeting system according to any one of claims 1 to 14, characterized in that said console (2) further comprises :
- multifrequency-code transmitting means connected between the subscriber telephone line (LTO) servicing the organizer set (PO) and said controlling means (23) for transmitting first and second predetermined sequences (SPC, SPI) each preceded by a console identification sequence (SIC) to the terminal (1),
- means connected to the controlling means (23) for dialling said first and second sequences to be transmitted to the terminal (1), and
- means connected to the controlling means for visualizing information relating to the first sequences (SPC), and informations carried by telemeeting parameter sequences (SPT) transmitted by the control circuit (10) and encoded by the multifrequency-code transmitter (16) in the terminal responsive to the second sequences (SPI).

16. Telemeeting system according to claim 15, in which the first sequences (SPC) relate to participant call number lists and time intervals respectively associated with telemeetings whereby the control circuit (10) memorizes each of the call number lists and the respective time interval and automatically dials, through the communication setting-up and cutting-off means (11$_1$- 11$_J$), the call numbers of the list at the beginning of said respective time interval.

17. Telemeeting system according to claim 15 or 16, in which the telemeeting parameter sequences (SPT) relate to parameters of telemeetings to be established by said terminal and parameters of a telemeeting established by said terminal.

*FIG.1*

PPA$_4$(PA$_4$)

PPA$_2$(PA$_2$)

PPA$_5$(PA$_5$)

PPA$_3$(PA$_3$)

LP$_2$

LP$_5$

LP$_3$

LT$_1$

1

AUTOCOM

AUTOCOM

AUTOCOM

LP$_4$

RESEAU TELEPHONIQUE

LT$_j$

TERMINAL
DE
TELEREUNION
(FIG.2)

LT$_J$

LP$_7$

AUTOCOM

AUTOCOM

AUTOCOM

RT

PPA$_7$(PA$_7$)

LP$_J$

SS,SA,SI

LP$_6$

PPA$_6$(PA$_6$)

LT0=LP$_1$

2

26

21

DETECTEUR
DECROCHAGE/
RACCROCHAGE

23

CONSOLE DE
TELEREUNION

PPA$_J$(PA$_J$)

25

22

MICRO-
CONTROLEUR

PANNEAU
D'AFFICHAGE
(FIG.3)

RECEPTEUR
CODE MF

24

SC

P0(OR)

EP 0 515 241 B1

# FIG.2

TERMINAL 1

111

VR1 — SC — 131
VE'1 — 141_1 — 14S_1
12_1 — 15_1 — 14_1

LT_1 — 11_1

VR_2 — 13_2
VE'_2 — 141_2 — 14S_2
12_2 — 15_2 — 14_2

LT_2 — 11_2

VR_3 — 13_3
VE'_3 — 141_3 — 14S_3
12_3 — 15_3 — 14_3

LT_3 — 11_3

VR_4 — 13_4
VE'_4 — 141_4 — 14S_4
12_4 — 15_4 — 14_4

LT_4 — 11_4

VR_5 — SI — 13_5
VE'_5 — 141_5 — 14S_5
12_5 — 15_5 — 14_5

LT_5 — 11_5

VR_6 — 13_6
VE'_6 — 141_6 — 14S_6
12_6 — 15_6 — 14_6

LT_6 — 11_6

VR_7 — 13_7
VE'_7 — 141_7 — 14S_7
12_7 — 15_7 — 14_7

LT_7 — 11_7

VR_8 — 13_8
VE'_8 — 141_8 — 14S_8
12_8 — 15_8 — 14_8

LT_J = LT_8 — 11_8

SS,SA,SI

16
EMETTEUR
CODE MF

10S

CIRCUIT DE
COMMANDE
ET
SIGNALISATION — 10

141_1 – 141_8

JONCTEURS     CONVERTISSEURS     DETECTEURS
CODE MF

## FIG.3

| | VD | V71 | VC | 24 |
|---|---|---|---|---|
| | ⊗ | ⊗ | ⊗ | CONSOLE DE TELEREUNION |
| MODES | Additif | 7+1 | Conf. 8 | |
| VOTES | Pour | Contre | Abst. | |

| N° LIGNE | VERROU LIGNE | LIGNE PRISE | PAROLE ALLOUEE | NOMS DES PARTICIPANTS |
|---|---|---|---|---|
| 1 | | $VP_1$ ⊕ | ⊗ —$VA_1$ | |
| 2 | $VV_2$ ● | $VP_2$ ⊕ | ⊗ —$VA_2$ | |
| 3 | ● | ⊕ | ⊗ | |
| 4 | ● | ⊕ | ⊗ | |
| 5 | $VV_5$ ● | $VP_5$ ⊕ | ⊗ —$VA_5$ | |
| 6 | ● | ⊕ | ⊗ | |
| 7 | ● | ⊕ | ⊗ | |
| J=8 | ● | ⊕ | ⊗ | |

$$VV_2 - VV_J \quad VP_1 - VP_J \quad VA_1 - VA_J$$

20